# EUROPÄISCHE PATENTSCHRIFT

(11) **EP 1 729 029 B1**
(45) Veröffentlichungstag und Bekanntmachung des Hinweises auf die Patenterteilung: **28.10.2009**
(21) Anmeldenummer: 06011471.7
(22) Anmeldetag: 02.06.2006
(51) Int. Cl.: F16F 7/06

(54) **Vorrichtung zur Verlangsamung der relativen Drehbewegung von zueinander beweglich angeordneten Bauteilen**
Device for slowing down the relative rotation of relatively movable elements
Dispositif pour ralentir le mouvement relatif de rotation de pièces se déplaçant l'une par rapport à l'autre

(30) Priorität: 03.06.2005 DE 202005008838 U
(43) Veröffentlichungstag der Anmeldung: 06.12.2006
(73) Patentinhaber: Key Plastics Germany GmbH, 57368 Lennestadt (DE)
(72) Erfinder: Hesener, Ralf, 57413 Finnentrop (DE)
(74) Vertreter: Köchling, Conrad-Joachim

(56) Entgegenhaltungen:
- GB-A- 698 208
- US-A- 4 721 328
- US-A- 5 879 237
- PATENT ABSTRACTS OF JAPAN Bd. 1999, Nr. 12, 29. Oktober 1999 (1999-10-29) -& JP 11 180260 A (ASMO CO LTD), 6. Juli 1999 (1999-07-06)

## Beschreibung

Die Erfindung betrifft eine Vorrichtung zur Verlangsamung einer relativen Drehbewegung zwischen zwei zueinander drehbeweglich, schiebebeweglich oder schwenkbeweglich angeordneten Bauteilen, in Form eines Gehäuses und einer im Gehäuse drehbar angeordneten Welle sowie auf die welle einwirkenden Reibelementen.

Aus der DE 102 42 981 B3 ist eine Vorrichtung gattungsgemäßer Art bekannt, bei der das Gehäuse eine Ringkammer aufweist, die mit einem viskosen Medium gefüllt ist. In das viskose Medium, also in die Ringkammer, greift ein schraubenfederartig ausgebildetes Teil ein. Dieses Teil ist beispielsweise an einem ausfahrbaren oder ausschwenkbaren Schubfach, einer schwenkbaren Blende, einem schwenkbaren Haltegriff oder dergleichen Funktionsteil angeordnet, während das Gehäuse in einem entsprechenden, vorzugsweise feststehenden Gegenstück, beispielsweise einem gestellfesten Teil, befestigt ist. Die entsprechenden mit einer solchen Vorrichtung zu kombinierenden Bauteile sind üblicherweise mit einer Schließ-, Öffnerfeder oder einer Rückdrehfeder gekoppelt, so dass das entsprechende Bauteil aus einer Nichtgebrauchsposition in eine Gebrauchsposition entgegen der Kraft der Feder verlagerbar ist oder unter wirkung der Feder in die Gebrauchsposition verstellbar ist. Um die Rückbewegung des in Gebrauchslage verschwenkten oder verschobenen Teiles unter Einwirkung der Schließfeder oder dergleichen zu verlangsamen oder die Federkraft unterstützte Bewegung des Teils in die Gebrauchslage zu verlangsamen, ist die angegebene Viskositätsbremse vorgesehen.

Dokument GB 698 208 offenbart die technische Merkmale der kennzeichnende Teil des Anspruchs 1.

Obwohl sich solche mit viskosem Medium gefüllten Elemente in der Praxis bewährt haben, besteht ein Bedarf dahingehend, eine entsprechende Bremswirkung auch ohne viskose Medien zu erreichen, wobei insbesondere darüber hinaus erwünscht ist, dass die Vorrichtung zur Verlangsamung der Drehbewegung bei mittels Federkraft bewegtem, damit gekoppelten Teil eine unterschiedlich schnelle Bewegung realisierbar macht, so dass beispielsweise die Schließbewegung anfangs relativ schnell und gegen Ende der Bewegung im stärkeren Maße verlangsamt erfolgt.

Zur Lösung dieser Aufgabe schlägt die Erfindung vor, dass die drehbar angeordnete Welle auf ihrem Mantel eine Aufdickung aufweist, die nur über einen Teil ihres Umfangs verläuft, und dass das Gehäuse innenliegend Reiblamellen, insbesondere etwa T-förmige Reiblammellen als Reibelemente aufweist, die zum Beispiel mit ihrem Längssteg am Gehäuse angebunden sind und zum Beispiel mit ihren Querstegen am Mantel der Welle anliegen, wobei mindestens eine erste Reiblamelle derart ausgebildet ist, dass sie nur an dem Bereich der Welle anliegt, der keine Aufdickung aufweist, und mindestens eine zweite Reiblamelle derart ausgebildet ist, dass sie sowohl an dem Bereich der welle anliegt, der keine Aufdickung aufweist als auch an dem Bereich der die Aufdickung aufweist.

Sämtliche Bestandteile der Vorrichtung sind vorzugsweise aus Kunststoff geformt. Die Reibelemente können gegebenenfalls aus besonders elastischem Material bestehen, um eine gute Anpressung und damit Reibung zu ermöglichen und eine gute Bremswirkung bezüglich der Welle zu erzeugen.

Vorzugsweise greifen die T-förmigen Reiblamellen mit den Enden ihrer Querstege am Mantel der Welle an. Durch die entsprechende Anordnung ist erreicht, dass die Drehbewegung beispielsweise beim mittels Federkraft bewirkten Rückstellen einer damit ausgerüsteten Einrichtung zunächst dadurch gebremst wird, dass die Enden der Querstege der T-förmigen Reiblamelle am Umfang der Welle anliegen, so dass die Drehbewegung verlangsamt wird. Sobald bei der Drehung der Welle die zweite Reiblamelle mit den Enden ihrer Querstege an den Bereich der Welle zur Anlage gelangt, der eine Aufdickung aufweist, wird die Bremsbewegung zusätzlich verlangsamt, so dass beispielsweise gegen Ende der möglichen Drehbewegung der Welle diese Bewegung nochmals verlangsamt wird, damit das damit gekoppelte Teil beispielsweise nicht schnell gegen irgendwelche gehäusefesten Bestandteile anschlägt und Geräusche verursacht.

Bevorzugt kann dabei vorgesehen sein, dass mehrere Reiblamellen erster Art vorgesehen sind.

Für eine gute Funktion ist es hilfreich, wenn die Reiblamellen gleichmäßig auf den Umfang der Welle verteilt angeordnet sind.

Ebenfalls ist das für die gewünschte Funktion förderlich, wenn die Aufdickung an einem axialen Endbereich der Welle ausgebildet ist, die ersten Reiblamellen sich über die Länge der Welle von deren einem Endbereich bis vor die Aufdickung am anderen Endbereich erstrecken und die zweite Reiblamelle länger als die ersten Reiblamellen ist und sich bis über die Aufdickung erstreckt.

Hierdurch ist insbesondere auch die Herstellung der entsprechenden Komponenten vereinfacht.

Unter Umständen ist bevorzugt vorgesehen, dass die Aufdickung sich über etwa 140 ° des Umfangs der welle erstreckt.

Durch diese Ausbildung wird die besonders verzögerte Bremsbewegung nur über einen Drehwinkel von etwa 140 ° erreicht, während im Übrigen im Drehbereich der Vorrichtung eine nur mäßig verlangsamte Bewegung erfolgt.

Um eine störungsfreie und gleichmäßige Bewegung zu realisieren, ist zudem bevorzugt vorgesehen, dass die Aufdickung sichelartig über den Mantel der Welle vorragt.

Auch kann zu diesem Zwecke vorgesehen sein, dass die Aufdickung nahezu stufenlos oder spitzwinklig in den Mantel der Welle übergeht.

Eine besonders bevorzugte Ausbildung wird darin gesehen, dass das Gehäuse topfartig ausgebildet ist und die Welle axial in das Gehäuse eingesetzt ist, wobei am außenliegenden Wellenende ein in die Mündung des Gehäuses eingreifender Kragen ausgebildet ist.

Zudem ist besonders bevorzugt vorgesehen, dass das Gehäuse von seinem Boden abragend ein Stützrohr aufweist, auf welches die als rohrförmiges Teil ausgebildete Welle aufschiebbar ist.

Das Stützrohr kann dabei versteifende wirkung haben und zudem als Führungselement für die darauf drehbare Welle dienen.

In an sich bekannter Weise ist zudem vorgesehen, dass außen am Mantel des Gehäuses und am freien Endbereich der Welle jeweils Mitnehmer ausgebildet sind, an denen jeweils ein Funktionsteil drehfest befestigbar ist.

Bei einem schwenkbaren Haltegriff in einem Kraftfahrzeug kann beispielsweise das eine Element, vorzugsweise das Gehäuse, an dem Haltegriff selbst mittels der Konturen festgelegt sein, während das andere Teil, nämlich die Welle an einem entsprechenden karosseriefest gehaltenen Lagerbock angekoppelt ist.

Eine erfindungsgemäße Vorrichtung kann beispielsweise dazu verwendet werden, eine beschleunigte Rotationsbewegung sanft zu bremsen oder auch die Ausfahrbewegung eines so genannten Cupholders sanft abzubremsen, indem zunächst eine geringfügige und gegen Ende der Bewegung stärkere Abbremsung erfolgt. Realisiert wird diese Ausbildung allein durch mechanische Elemente, ohne dass es der Zuhilfenahme von viskosen Medien oder dergleichen bedarf.

Ein Ausführungsbeispiel der Erfindung ist in der Zeichnung dargestellt und im Folgenden näher beschrieben. Es zeigt:
- Figur 1: eine erfindungsgemäße Vorrichtung im Zusammenbau von schräg vorn gesehen;
- Figur 2: desgleichen vor dem Zusammenbau in gleicher Ansicht;
- Figur 3: die Vorrichtung von hinten gesehen in der montierten Lage;
- Figur 4: die Vorrichtung in gleicher Blickrichtung vor der Komplettmontage;
- Figur 5: die Vorrichtung vor der Montage in Seitenansicht;
- Figur 6: die Vorrichtung um 90 ° um die Längsachse gegenüber der Figur 5 gedrehter Position;
- Figur 7: die Vorrichtung zusammengebaut in Seitenansicht;
- Figur 8: desgleichen im Schnitt A/A der Figur 7 gesehen;
- Figur 9: das Detail B der Figur 8 in Einzeldarstellung;
- Figur 10: die Vorrichtung von vorn gesehen.

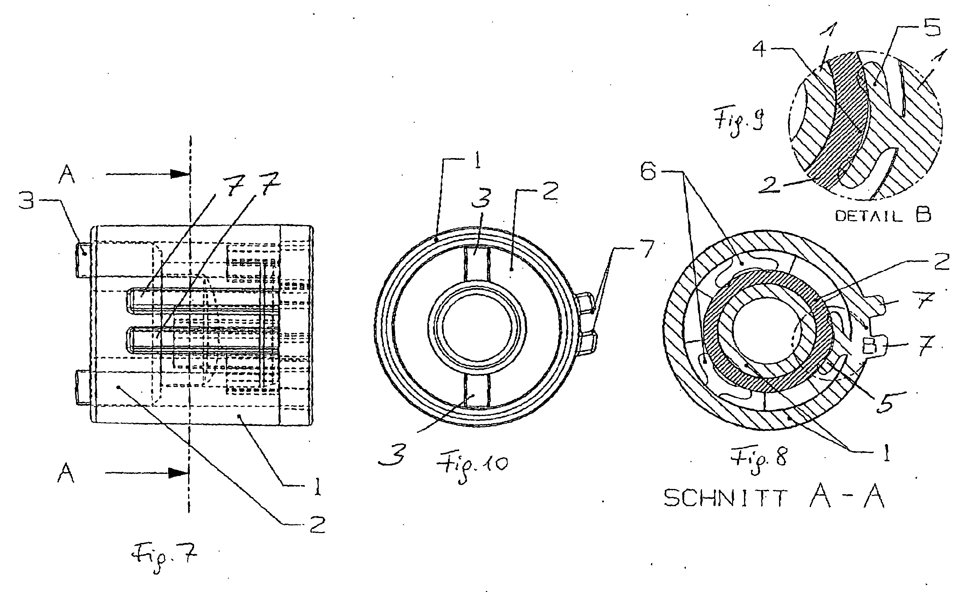

Die erfindungsgemäß vorgesehene Vorrichtung zur Verlangsamung einer relativen Drehbewegung zwischen zwei zueinander drehbeweglich, schwenkbeweglich oder schiebebeweglich angeordneten Bauteile besteht aus einem Gehäuse 1 und einer in das Gehäuse eingesetzten und im Gehäuse 1 drehbar angeordneten Welle 2. Die drehbar angeordnete Welle 2 weist auf ihrem Mantel eine Aufdickung 4 auf, die nur über einen Teil ihres Umfangs verläuft. Das Gehäuse 1 weist innen liegend etwa T-förmige Reiblamellen 5,6 als Reibelemente auf, die mit ihrem Längssteg jeweils am Gehäuse 1 angebunden beziehungsweise angeformt sind und mit ihren Querstegen, insbesondere mit den Enden der Querstege am Mantel der Welle 2 anliegen, wie insbesondere aus der Darstellung gemäß Figur 8 ersichtlich ist. Mindestens eine erste Reiblamelle 6 ist derart ausgebildet, dass sie nur an dem Bereich der Welle 2 anliegt, der keine Aufdickung 4 aufweist. Mindestens eine zweite Lamelle 5 ist so ausgebildet, dass sie sowohl an dem Bereich der Welle 2 anliegt, der keine Aufdickung 4 aufweist, als auch an dem Bereich, der die Aufdickung 4 aufweist.

Wie insbesondere aus der Darstellung gemäß Figur 8 ersichtlich, sind zwei Reiblamellen 6 erster Art und eine Reiblamelle 5 zweiter Art vorgesehen. Die Reiblamellen sind gleichmäßig auf den Umfang der Welle 2 verteilt angeordnet. Im Ausführungsbeispiel ist die Aufdickung 4 an einem axialen Endbereich der Welle 2 ausgebildet. Die ersten Reiblamellen 6 erstrecken sich über die Länge der Welle, von deren einem Endbereich bis vor die Aufdickung 4 in anderem Endbereich, während die zweite Reiblamelle 5 länger als die erste Reiblamelle 6 ist und sich zusätzlich über den Bereich erstreckt, in dem die Aufdickung 4 vorgesehen ist. Die Aufdickung selbst erstreckt sich etwa über
140 ° des Umfangs der Welle 2. Dabei ist der Übergang von der Aufdickung 4 zum Mantel der Welle möglichst stufenlos ausgebildet.

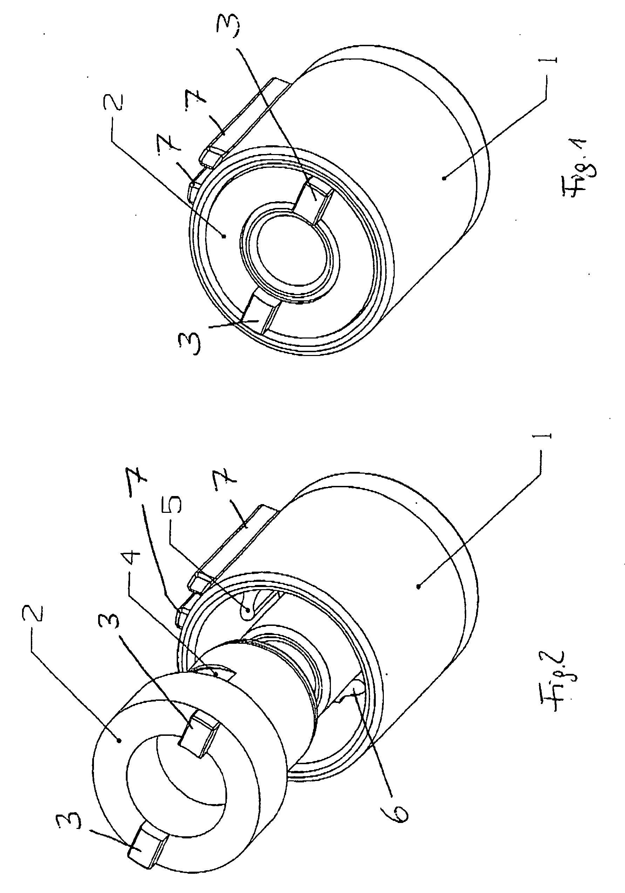

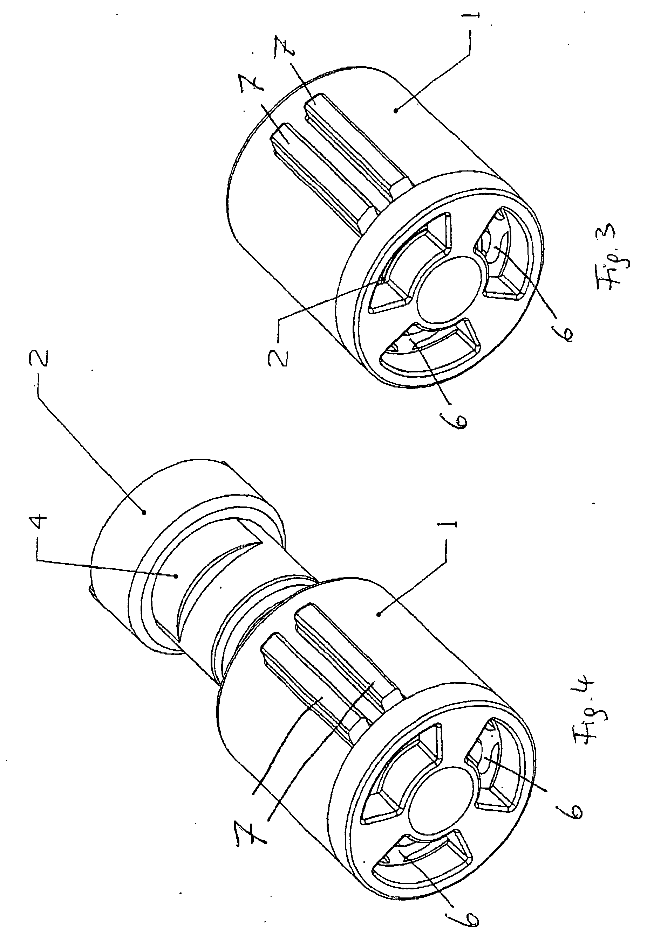

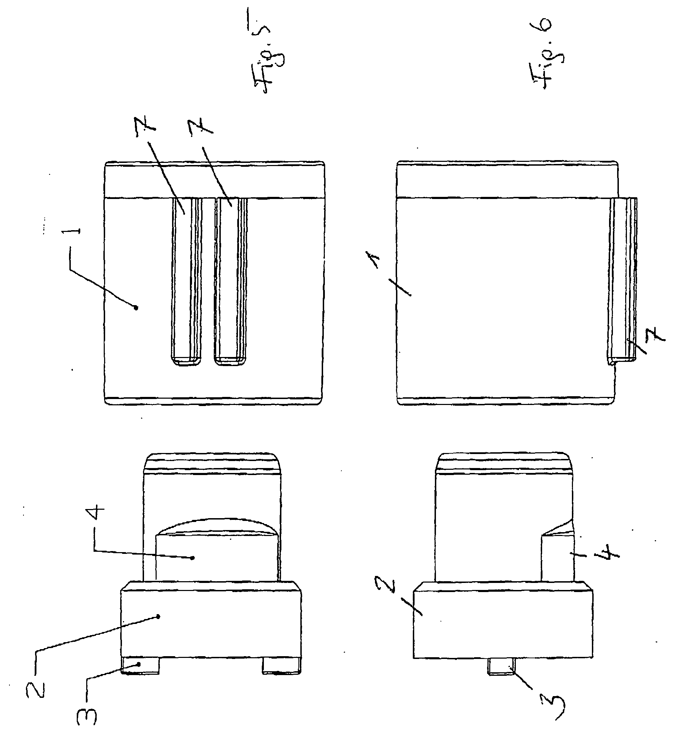

Das Gehäuse 1 ist topfartig ausgebildet und die Welle 2 ist axial in das Gehäuse 1 eingesetzt, wobei am außenliegenden Wellenende ein in die Mündung des Gehäuses 1 eingreifender Kragen ausgebildet ist, wie insbesondere in Figur 2, Figur 4 und Figur 5 bis 7 ersichtlich ist. Zusätzlich weist das Gehäuse 1 von seinem Boden abragend ein Stützrohr auf, auf welches die als rohrförmiges Element ausgebildete Welle 2 aufschiebbar ist, so dass die Welle 2 geführt und gestützt ist.

Außen am Mantel des Gehäuses 1 und am freien Endbereich der Welle 2 sind jeweils Mitnehmer 7 beziehungsweise 3 vorgesehen, so dass diese drehfest mit einem Funktionsteil jeweils koppelbar sind.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Verlangsamung einer relativen Drehbewegung zwischen zwei zueinander drehbeweglich, schiebebeweglich oder schwenkbeweglich angeordneten Bauteilen, in Form eines Gehäuses (1) und einer im Gehäuse (1) drehbar angeordneten Welle (2) sowie auf die Welle (2) einwirkenden Reibelementen, wobei die drehbar angeordnete Welle (2) auf ihrem Mantel eine Aufdickung (4) aufweist, die nur über einen Teil ihres Umfangs verläuft, und **dadurch gekennzeichnet, dass** das Gehäuse (1) innenliegend Reibelementen, insbesondere etwa T-förmige Reiblammellen (5,6) als Reibelemente aufweist, die mit ihrem Längssteg am Gehäuse (1) angebunden sind und mit ihren Querstegen am Mantel der Welle (2) anliegen, wobei mindestens eine erste Reiblamelle (6) derart ausgebildet ist, dass sie nur an dem Bereich der Welle (2) anliegt, der keine Aufdickung (4) aufweist, und mindestens eine zweite Reiblamelle (5) derart ausgebildet ist, dass sie sowohl an dem Bereich der Welle (2) anliegt, der keine Aufdickung (4) aufweist als auch an dem Bereich der die Aufdickung (4) aufweist.

2. Vorrichtung nach Anspruch 1, **dadurch gekennzeichnet, dass** mehrere Reiblamellen (6) erster Art vorgesehen sind.

3. Vorrichtung nach Anspruch 1 oder 2, **dadurch gekennzeichnet, dass** die Reiblamellen (5,6) gleichmäßig auf den Umfang der Welle (2) verteilt angeordnet sind.

4. Vorrichtung nach einem der Ansprüche 1 bis 3, **dadurch gekennzeichnet, dass** die Aufdickung (4) an einem axialen Endbereich der Welle (2) ausgebildet ist, die ersten Reiblamellen (6) sich über die Länge der Welle (2) von deren einem Endbereich bis vor die Aufdickung (4) am anderen Endbereich erstrecken und die zweite Reiblamelle (5) länger als die ersten Reiblamellen (6) ist und sich bis über die Aufdickung (4) erstreckt.

5. Vorrichtung nach einem der Ansprüche 1 bis 4, **dadurch gekennzeichnet, dass** die Aufdickung (4) sich über etwa 140 ° des Umfangs der Welle (2) erstreckt.

6. Vorrichtung nach einem der Ansprüche 1 bis 5, **dadurch gekennzeichnet, dass** die Aufdickung (4) sichelartig über den Mantel der Welle (2) vorragt.

7. Vorrichtung nach einem der Ansprüche 1 bis 6, **dadurch gekennzeichnet, dass** die Aufdickung (4) nahezu stufenlos oder spitzwinklig in den Mantel der Welle (2) übergeht.

8. Vorrichtung nach einem der Ansprüche 1 bis 7, **dadurch gekennzeichnet, dass** das Gehäuse (1) topfartig ausgebildet ist und die Welle (2) axial in das Gehäuse (1) eingesetzt ist, wobei am außenliegenden wellenende ein in die Mündung des Gehäuses (1) eingreifender Kragen ausgebildet ist.

9. Vorrichtung nach Anspruch 8, **dadurch gekennzeichnet, dass** das Gehäuse (1) von seinem Boden abragend ein Stützrohr aufweist, auf welches die als rohrförmiges Teil ausgebildete Welle (2) aufschiebbar ist.

10. Vorrichtung nach einem der Ansprüche 1 bis 9, **dadurch gekennzeichnet, dass** außen am Mantel des Gehäuses (1) und am freien Endbereich der Welle (2) jeweils Mitnehmer (3,7) ausgebildet sind, an denen jeweils ein Funktionsteil drehfest befestigbar ist.

## Claims

1. Device for slowing down a relative rotation movement between two components arranged such that they can move with respect to one another by rotating, sliding or pivoting, said components being in the form of a housing (1) and a shaft (2) arranged rotatably in the housing (1) and also friction elements acting on the shaft (2), wherein the rotatably arranged shaft (2) has on its outer surface a thickened portion (4) which runs only around part of its circumference, and **characterised in that** the housing (1) has friction elements on the inside, in particular for example T-shaped friction blades (5, 6), as friction elements which are attached by their longitudinal strut to the housing (1) and bear with their transverse struts against the outer surface of the shaft (2), wherein at least a first friction blade (6) is designed in such a way that it bears only against the region of the shaft (2) which has no thickened portion (4), and at least a second friction blade (5) is designed in such a way that it bears both against the region of the shaft (2) which has no thickened portion (4) and also against the region which has the thickened portion (4).

2. Device according to claim 1, **characterised in that** a plurality of friction blades (6) of the first type are provided.

3. Device according to claim 1 or 2, **characterised in that** the friction blades (5, 6) are arranged uniformly distributed around the circumference of the shaft (2).

4. Device according to one of claims 1 to 3, **characterised in that** the thickened portion (4) is formed on an axial end region of the shaft (2), the first friction blades (6) extend over the length of the shaft (2) from one end region thereof to just before the thickened portion (4) at the other end region, and the second friction blade (5) is longer than the first friction blades (6) and extends past the thickened portion (4).

5. Device according to one of claims 1 to 4, **characterised in that** the thickened portion (4) extends around approximately 140° of the circumference of the shaft (2).

6. Device according to one of claims 1 to 5, **characterised in that** the thickened portion (4) protrudes beyond the outer surface of the shaft (2) in a crescent-shaped manner.

7. Device according to one of claims 1 to 6, **characterised in that** the thickened portion (4) merges into the outer surface of the shaft (2) in an almost smooth manner or at an acute angle.

8. Device according to one of claims 1 to 7, **characterised in that** the housing (1) is pot-shaped and the shaft (2) is inserted axially into the housing (1), wherein a collar which engages in the mouth of the housing (1) is formed at the outer end of the shaft.

9. Device according to claim 8, **characterised in that** the housing (1) has a support tube protruding from its base, onto which support tube the shaft (2) can be pushed, said shaft being designed as a tubular part.

10. Device according to one of claims 1 to 9, **characterised in that** tappets (3, 7) are respectively formed on the outside of the outer surface of the housing (1) and on the free end region of the shaft (2), to which tappets a functional part can in each case be attached so as to rotate therewith.

## Revendications

1. Dispositif pour ralentir un mouvement rotatoire relatif entre deux pièces structurelles mobiles en rotation, à coulissement ou à pivotement l'une par rapport à l'autre, revêtant la forme d'un carter (1) et d'un arbre (2) logé à rotation dans ledit carter (1), ainsi que d'éléments de frottement agissant sur ledit arbre (2), ledit arbre (2) agencé à rotation présentant, sur son enveloppe, un renflement (4) s'étendant uniquement sur une partie de son pourtour, **caractérisé par le fait que** le carter (1) est intérieurement muni d'éléments de frottement, notamment de lamelles de frottement (5, 6) sensiblement configurées en T qui constituent des éléments de frottement, sont reliées au carter (1) par leur membrure longitudinale, et sont en applique sur l'enveloppe de l'arbre (2) par leurs membrures transversales, sachant qu'au moins une première lamelle de frottement (6) est réalisée de telle sorte qu'elle porte uniquement contre la région de l'arbre (2) ne présentant aucun renflement (4) ; et qu'au moins une seconde lamelle de frottement (5) est réalisée de telle sorte qu'elle porte aussi bien contre la région de l'arbre (2) qui ne présente aucun renflement (4), que contre la région munie du renflement (4).

2. Dispositif selon la revendication 1, **caractérisé par** la présence de plusieurs lamelles de frottement (6) du premier type.

3. Dispositif selon la revendication 1 ou 2, **caractérisé par le fait que** les lamelles de frottement (5, 6) sont agencées avec répartition uniforme sur le pourtour de l'arbre (2).

4. Dispositif selon l'une des revendications 1 à 3, **caractérisé par le fait que** le renflement (4) est façonné dans une région extrême axiale de l'arbre (2) ; les premières lamelles de frottement (6) s'étendent sur la longueur dudit arbre (2), depuis l'une des régions extrêmes de ce dernier jusqu'à un emplacement situé avant le renflement (4), dans l'autre région extrême ; et la seconde lamelle de frottement (5) est plus longue que les premières lamelles de frottement (6), et s'étend jusqu'au-delà du renflement (4).

5. Dispositif selon l'une des revendications 1 à 4, **caractérisé par le fait que** le renflement (4) s'étend sur environ 140° du pourtour de l'arbre (2).

6. Dispositif selon l'une des revendications 1 à 5, **caractérisé par le fait que** le renflement (4) fait saillie, à la manière d'un croissant, au-delà de l'enveloppe de l'arbre (2).

7. Dispositif selon l'une des revendications 1 à 6, **caractérisé par le fait que** le renflement (4) fusionne approximativement en continu, ou à angle aigu, dans l'enveloppe de l'arbre (2).

8. Dispositif selon l'une des revendications 1 à 7, **caractérisé par le fait que** le carter (1) est de réalisation du type cuvette, et l'arbre (2) est inséré axialement dans ledit carter (1), une collerette, pénétrant dans l'embouchure dudit carter (1), étant façonnée à l'extrémité extérieure dudit arbre.

9. Dispositif selon la revendication 8, **caractérisé par le fait que** le carter (1) offre une tubulure d'appui qui dépasse au-delà de son fond, et sur laquelle peut être enfilé l'arbre (2) réalisé sous la forme d'une pièce tubulaire.

10. Dispositif selon l'une des revendications 1 à 9, **caractérisé par le fait que** des organes respectifs d'entraînement (3, 7), auxquels une pièce fonctionnelle peut être respectivement fixée avec verrouillage rotatif, sont extérieurement façonnés sur l'enveloppe du carter (1) et dans la région extrême libre de l'arbre (2).
